# EUROPÄISCHE PATENTANMELDUNG

(11) **EP 1 972 869 A2**
(43) Veröffentlichungstag der Anmeldung: **24.09.2008**
(21) Anmeldenummer: 08102716.1
(22) Anmeldetag: 18.03.2008
(51) Int. Cl.: F24J 3/08, F28F 21/06

(54) **Erdkollektor**

(30) Priorität: 22.03.2007 DE 202007004243 U
(71) Anmelder: Renersys GmbH, 63820 Elsenfeld (DE)
(72) Erfinder: Frei, Peter, 80333, München (DE)
(74) Vertreter: Hofstetter, Alfons J.

(57) **Zusammenfassung**

Die vorliegende Erfindung betrifft einen Erdkollektor bestehend aus mindestens einem ein Wärmeträgermedium leitenden, flexiblen Rohr (18), wobei das Rohr (18) an einem Ende mit einem Vorlaufrohr (26) und mit dem anderen Ende mit einem Rücklaufrohr (28) verbunden ist. Der Erdkollektor (10) weist mindestens zwei parallel oder in vorbestimmten Winkeln zueinander angeordnete Gitterelemente (12, 14, 16) auf, wobei die Gitterelemente (12, 14, 16) mittels Verbindungsstegen (34) miteinander verbunden und voneinander beabstandet sind und das mindestens eine Rohr (18) an den jeweiligen einzelnen Gitterelementen (12, 14, 16) ungefähr mäander- oder schneckenförmig angeordnet und befestigt ist, derart, dass das Rohr (18) eine der Anzahl der Gitterelemente (12, 14, 16) entsprechende Anzahl an Verlaufsebenen ausbildet und durchläuft.

## Beschreibung

Die vorliegende Erfindung betrifft einen Erdkollektor bestehend aus mindestens einem ein Wärmeträgermedium leitenden und flexiblen Rohr, wobei das Rohr mit einem Ende mit einem Vorlaufrohr und mit dem anderen Ende mit einem Rücklaufrohr verbunden ist.

Erdkollektoren dieser Art dienen dazu, die im Erdreich enthaltene Wärmeenergie mittels Wärmeübertragung auf das in den Rohren der Erdkollektoren strömende Wärmeträgermedium zu übertragen. Die Wärmenergie wird anschließend einer Wärmepumpe zugeführt, die diese Wärme an zum Beispiel einen Heizkreislauf eines Gebäudes abgibt. Üblicherweise werden Erdkollektoren benutzt, die über ein großflächig im Erdreich angeordnetes Rohrsystem verfügen. Dabei sind die Menge und die Wärmeentzugsfläche abhängig vom Wärmebedarf und der Bodenbeschaffenheit. Insbesondere horizontal, in einer Ebene verlegte Erdkollektoren haben einen sehr hohen Flächenbedarf. Üblicherweise beträgt die vom Erdkollektor benötigte Fläche etwa das 1,5-fache bis 2,5-fache der zu beheizenden Gebäudefläche. Dabei muss diese Fläche unbebaut und unversiegelt sein, so dass in etwa 1,2 m bis 2,0 m Tiefe der Erdkollektor verlegt werden kann. Zudem muss eine nachträgliche Überbauung der Fläche vermieden werden, da sonst keine schnelle Regeneration des genutzten Erdreichs möglich ist. Neben einem hohen Flächenverbrauch ist der Einbau von bekannten Erdkollektoren üblicherweise mit einem relativ großen Zeitaufwand und entsprechenden Kosten verbunden.

Zudem können bekannte Erdkollektorsysteme vor Ort, d. h. im Einsatzgebiet nur sehr schwer an mögliche Besonderheiten des Erdreichs oder auch topografische Gegebenheiten angepasst werden, um eine optimierte Wärmeaufnahmefähigkeit zu gewährleisten.

Es ist daher Aufgabe der vorliegenden Erfindung, einen gattungsgemäßen Erdkollektor bereitzustellen, welcher einen schnellen und kostengünstigen Einbau sowie eine optimierte Wärmeaufnahmefähigkeit gewährleistet.

Zur Lösung dieser Aufgabe dient ein Erdkollektor mit den Merkmalen des Patentanspruchs 1.

Vorteilhafte Ausgestaltungen des erfindungsgemäßen Erdkollektors sind in den Unteransprüchen beschrieben.

Ein erfindungsgemäßer Erdkollektor besteht aus mindestens einem ein Wärmeträgermedium leitenden und flexiblen Rohr, wobei das Rohr an einem Ende mit einem Vorlaufrohr und mit dem anderen Ende mit einem Rücklaufrohr verbunden ist. Dabei weist der Erdkollektor mindestens zwei parallel oder in vorbestimmten Winkeln zueinander angeordnete Gitterelemente auf, wobei die Gitterelemente mittels Verbindungsstegen miteinander verbunden und voneinander beabstandet sind. Das mindestens eine Rohr ist dabei an den jeweiligen einzelnen Gitterelementen ungefähr mäander- oder schneckenförmig angeordnet und befestigt, derart, dass das Rohr eine der Anzahl der Gitterelemente entsprechende Anzahl an Verlaufsebenen ausbildet und durchläuft. Gemäß einer bevorzugten Ausführungsform der Erfindung weist der Erdkollektor mindestens drei parallel oder in vorbestimmten Winkeln zueinander angeordnete Gitterelemente auf. Durch die erfindungsgemäße Ausgestaltung ist es möglich einen Erdkollektor bereitzustellen, der ein Rohrsystem aufweist, welches über mehrere Verlaufsebenen verläuft und somit eine relativ hohe Verlegedichte der Rohre bei minimiertem Flächenbedarf gewährleistet. Entsprechend der örtlichen Gegebenheiten bezüglich der Topografie und der Beschaffenheit des Erdreichs kann die Anzahl der Gitterelemente mit entsprechenden Rohr-Verlaufsebenen gewählt werden. Der erfindungsgemäße Erdkollektor kann dabei als vorgefertigtes Bauelement ausgebildet sein und lässt sich somit bereits vor dem endgültigen Einbau hinsichtlich seiner Wärmeaufnahmefähigkeit optimieren. Zudem kann der erfindungsgemäße Erdkollektor senkrecht oder auch horizontal im Erdreich vergraben werden, auch andere Positionierungen des erfindungsgemäßen Erdkollektors sind denkbar. Zudem kann der Einbau beziehungsweise das Eingraben des erfindungsgemäßen Erdkollektors schnell und kostengünstig durchgeführt werden, da die Form und Größe des Erdkollektors durch die Gitterelemente vorgegeben und vorbekannt sind. Zudem sorgt die mäander- oder schneckenförmige Verlegeart der Rohre für eine gleichmäßige Wärmeverteilung und Wärmeaufnahme.

Gemäß einer weiteren vorteilhaften Ausgestaltung der Erfindung sind das Rohr und die Vor- und Rücklaufrohre einstückig ausgebildet. Dies bedeutet, dass man mit einem Rohr beziehungsweise einem Schlauch einen Wärmeentnahmekreislauf schafft, der eine Wärmepumpe mit einem oder mehreren Erdkollektoren verbindet.

Gemäß weiteren vorteilhaften Ausgestaltungen der Erfindung bestehen das Rohr und/oder die Vor- und Rücklaufrohre aus verwitterungsbeständigem Kunststoff, insbesondere Polyethylen oder Polybutylen. Als Gitterelemente können Betonstahlmatten Verwendung finden. Bei Betonstahlmatten handelt es sich um mattenähnliche Gitterelemente aus sich kreuzenden Längs- und Querstäben von kalt verformtem, geripptem Betonstahl. An den Kreuzungspunkten sind die Längs- und Querstäbe miteinander verschweißt. Es ist aber auch möglich, dass die Gitterelemente aus einem verwitterungsbeständigen Kunststoff bestehen. Die Verwendung der genannten Materialien ermöglicht einerseits eine sehr kostengünstige Herstellung der erfindungsgemäßen Erdkollektoren. Andererseits weisen die das Wärmeträgermedium führenden Rohre eine genügend hohe Flexibilität auf, um ein mäander- oder schneckenförmiges Verlegen im Bereich der Gitterelemente problemlos zu erlauben.

Gemäß weiteren vorteilhaften Ausgestaltungen der Erfindung weisen die Verbindungsstege gleiche Längen auf. Es ist aber auch möglich, dass die Verbindungsstege an jeweils gegenüberliegenden Enden des Erdkollektors unterschiedliche Längen aufweisen oder dass die Verbindungsstege nur an einem tiefer in das Erdreich einzubringenden Ende des Erdkollektors ausgebildet sind. Dadurch ist eine Vielzahl von Ausgestaltungsmöglichkeiten des erfindungsgemäßen Erdkollektors möglich. Die tatsächliche Ausgestaltung, wie auch die Art der Verlegung des Erdkollektors im Erdreich richtet sich wiederum nach den topografischen Gegebenheiten wie auch der Beschaffenheit des Erdreichs. Neben einer senkrechten oder horizontalen Positionierung von quaderförmigen Erdkollektoren ist auch eine ungefähr senkrechte Positionierung eines ungefähr V-förmigen Erdkollektors möglich. Die ungefähr V-förmige Ausgestaltung des Erdkollektors wird entweder durch unterschiedliche Längen der Verbindungsstege oder durch das genannte Anbringen der Verbindungsstege nur an dem tiefer in das Erdreich einzubringenden Ende des Erdkollektors verwirklicht. Gemäß einer besonders Kosten sparenden Einbauweise des erfindungsgemäßen Erdkollektors wird ein quaderförmiger Kollektor bestehend aus drei zueinander parallelen Gitterelementen senkrecht in das Erdreich eingebracht, wobei anschließend die oberen, d. h. der Erdoberfläche näher liegenden Verbindungsstege aufgetrennt werden. Dadurch ergibt sich ein "Aufklappen" der äußeren Gitterelemente zur Ausbildung des ungefähr V-förmigen Erdkollektors. Auch würfelförmige Erdkollektoren sind denkbar.

In einer weiteren vorteilhaften Ausgestaltung des erfindungsgemäßen Erdkollektors ist an mindestens einem Gitterelemente im Bereich des Rohrs ein zweites Rohrsystem zur Übertragung von Wärme aus einem Sonnenkollektor angeordnet und befestigt. Das zweite Rohrsystem kann dabei ungefähr mäander- oder schneckenförmig angeordnet und befestigt sein. Dadurch ist es möglich, dass die Wärme des Sonnenkollektors dem Erdreich im Bereich des Erdkollektors und damit dem Wärmeträgermedium zugeleitet wird. Damit kann einerseits die Effektivität des Erdkollektors beziehungsweise der damit verbundenen Wärmepumpe, insbesondere bei kalten Außentemperaturen oder bei geringer Sonneneinstrahlung erhöht werden. Andererseits kann ein Einfrieren des Wärmeträgermediums zuverlässig verhindert werden.

In einer weiteren vorteilhaften Ausgestaltung der Erfindung können die Vor- und Rücklaufrohre nicht nur mit der Wärmepumpe direkt, sondern indirekt über mindestens eine Sammler-/Verteilereinheit zur Aufnahme des Wärmeträgermediums verbunden sein, wobei die Sammler-/Verteilereinheit flüssigkeitsleitend mit mindestens einer Wärmepumpe verbunden ist. Durch die Sammler-/Verteilereinheit ist es möglich, den Druck innerhalb des Rohrsystems zu kontrollieren und auszugleichen. Zugleich können Temperaturunterschiede mehrerer Erdkollektoren ausgeglichen werden.

Gemäß weiteren vorteilhaften Ausgestaltungen der Erfindung ist das Rohr mittels einer Vielzahl von Klemmelementen oder Kabelbindern an den Gitterelementen befestigt. Dabei ist es möglich, dass die Klemmelemente mit dem Gitterelement einstückig ausgebildet sind. Dadurch ist eine einfache, schnelle und kostengünstige Verbindung des Rohrs zur Leitung des Wärmeträgermediums möglich. Zudem ist eine Vorkonfektionierung der Klemmstellen möglich, was wiederum zu einer deutlichen Arbeitsersparnis beim Aufbau des Erdkollektors führt.

Gemäß einer weiteren vorteilhaften Ausgestaltung der Erfindung sind mehrere Erdkollektoren in Serie oder parallel geschaltet beziehungsweise angeordnet. Dadurch lassen sich je nach Beschaffenheit des Erdreichs und der Umgebungstopografie unterschiedliche Anlagenaufbauten zur Gewährleistung einer optimierten Wärmeaufnahmefähigkeit gewährleisten.

Weitere Einzelheiten, Merkmale und Vorteile der Erfindung ergeben sich aus der folgenden Beschreibung der in den Figuren dargestellten Ausführungsbeispiele. Es zeigen
- Figur 1: eine schematische Darstellung mehrerer erfindungsgemäßer Erdkollektoren in unterschiedlichen Einbauvarianten;
- Figur 2: eine schematische Darstellung des erfindungsgemäßen Erdkollektors gemäß einer ersten, ungefähr V-förmigen Einbauvariante mit einem Solarkreis; und
- Figur 3: eine schematische Darstellung des erfindungsgemäßen Erdkollektors gemäß einer zweiten, ungefähr V-förmigen Einbauvariante mit einem Solarkreis.

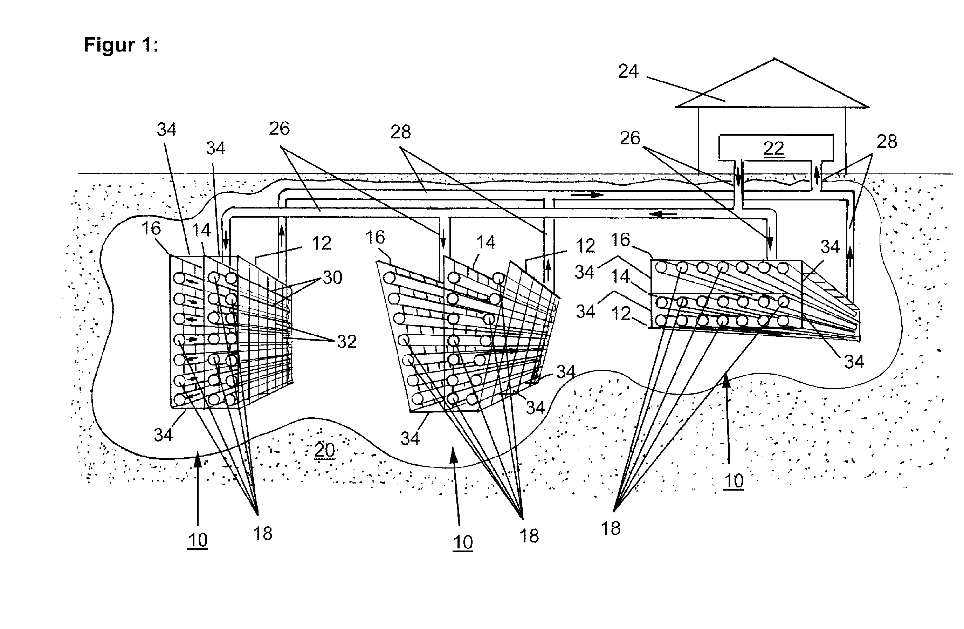

Die Figur 1 zeigt eine schematische Darstellung mehrerer unterschiedlich ausgestalteter Erdkollektoren 10 in unterschiedlichen Einbauvarianten und -positionen. Man erkennt, dass jeder Erdkollektor 10 ein flexibles Rohr 18 umfasst, wobei das Rohr 18 an einem Ende mit einem Vorlaufrohr 26 und mit dem anderen Ende mit einem Rücklaufrohr 28 verbunden ist. Das Rohr 18 ist dabei flexibel ausgestaltet und besteht aus verwitterungsbeständigem Kunststoff. Insbesondere kann das Rohr 18 aus Polyethylen oder Polybutylen bestehen. Des Weiteren erkennt man, dass das Vorlaufrohr 26 und das Rücklaufrohr 28 mit einer Wärmepumpe 22 eines Gebäudes 24 verbunden sind. Die Wärmepumpe 22 steht mit einem Heizkreislauf (nicht dargestellt) des Gebäudes 24 in Wirkverbindung. Die in der Figur 1 innerhalb der Rohre 18 wie auch der Vor- und Rücklaufrohre 26, 28 dargestellten schwarzen Pfeile zeigen die Fließrichtung eines Wärmeträger-mediums innerhalb des Rohrsystems 18, 26, 28 an. Als Wärmeträgermedium kann dabei Wasser oder eine Mischung aus Wasser und einem Frostschutzmittel verwendet werden. Auch andere Wärmeleitenden Flüssigkeiten sind verwendbar.

In den dargestellten Ausführungsbeispielen sind das Rohr 18 und die Vor- und Rücklaufrohre 26, 28 einstückig ausgebildet. Es ist aber auch möglich, diese Elemente separat auszubilden und mit entsprechenden Verbindungselementen miteinander flüssigkeitsleitend zu verbinden. Zudem können auch die Vor- und Rücklaufrohre 26, 28 aus verwitterungsbeständigem Kunststoff, insbesondere Polyethylen oder Polybutylen bestehen. Allerdings sind auch andere Materialien, wie Metalle oder Metalllegierungen für das Rohr 18 wie auch die Vor- und Rücklaufrohre 26, 28 verwendbar.

Des Weiteren erkennt man, dass die Erdkollektoren 10 drei parallel oder in vorbestimmten Winkeln zueinander angeordnete Gitterelemente 12, 14, 16 aufweisen. Die Gitterelemente 12, 14, 16 sind dabei jeweils mittels Verbindungsstegen 34 miteinander verbunden und voneinander beabstandet. Die Verbindungsstege 34 bestehen aus Stahl, andere Materialien sind jedoch auch verwendbar. Das Rohr 18 ist an den jeweiligen einzelnen Gitterelementen 12, 14, 16 ungefähr mäanderförmig angeordnet und befestigt, derart, dass das Rohr 18 eine der Anzahl der Gitterelemente 12, 14, 16 entsprechende Anzahl an Verlaufsebenen ausbildet und durchläuft. Bei den dargestellten Ausführungs-beispielen sind pro Erdkollektor 10 drei Verlaufsebenen ausgebildet. Die Gitterelemente 12, 14, 16 sind dabei handelsübliche Betonstahlmatten, die in einheitlichen Breiten von 2,15 m und in Längen von 5 m beziehungsweise 6 m erhältlich sind. Der Abstand der Gitterelemente 12, 14, 16 zueinander beträgt ca. 30 cm, um einer möglichen Frostgefahr entgegenzuwirken. Entsprechendes gilt für den Abstand der einzelnen Windungen des ungefähr mäanderförmig verlaufenden Rohrs 18.

Bei den dargestellten Ausführungsbeispielen weisen die Verbindungsstege 34 gleiche Längen auf. Bei dem in der Figurenmitte dargestellten ungefähr V-förmigen Erdkollektor 10 wurden die im oberen Bereich des Erdkollektors 10 ursprünglich angeordneten Verbindungsstege 34 aufgetrennt, so dass die außenliegenden Gitterelemente 12, 16 in einem entsprechenden Winkel zu dem mittig angeordneten Gitterelement 14 nach außen gebogen werden können. Bei dieser Ausführungsform des ungefähr V-förmigen Erdkollektors 10 ist es aber auch möglich, die Verbindungsstege 34 nur an dem tiefer in dem Erdreich 20 einzubringenden Ende des Erdkollektors 10 auszubilden.

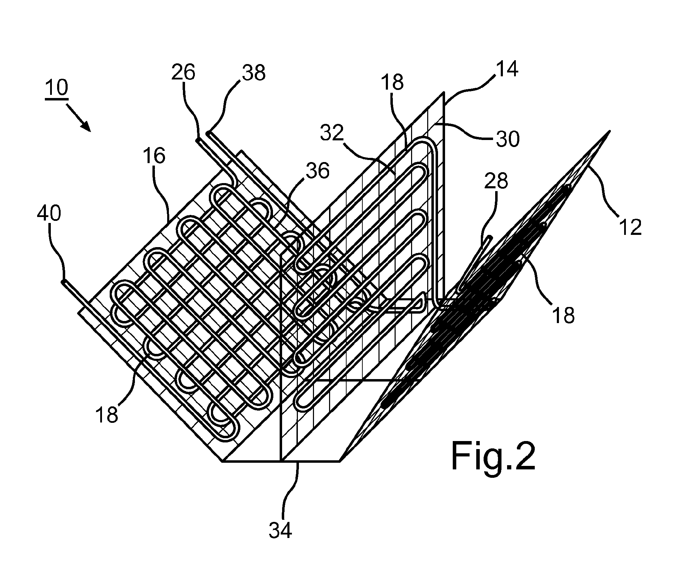

Des Weiteren erkennt man, dass die einzelnen Gitterelemente 12, 14, 16 Quer- und Längsstreben 30, 32 aufweisen, die an den Kreuzungspunkten miteinander verschweißt sind. Die Quer- und Längsstreben 30, 32 dienen dazu, das Rohr 18 am Gitterelement mittels Klemmelementen oder Kabelbindern an den Gitterelementen 12, 14, 16 zu befestigen. Durch die gitterförmige Ausbildung ist eine Vielzahl von Gestaltungsmöglichkeiten bei der Verlegung der Rohre 18 gegeben. Die in Figur 1 dargestellten Rohre 18 sind an ihren Stirnseiten jeweils geschnitten, d. h. offen dargestellt. In der Praxis verläuft das Rohr 18 natürlich an den jeweiligen Endseiten der Gitterelemente 12, 14, 16 durchgehend, d. h. in diesen Bereichen befinden sich die Umlenkpunkte der einzelnen Mäander des Rohrs 18 (vergleiche auch Figur 2).

Aus der Figur 1 wird zudem deutlich, dass der Erdkollektor 10 in unterschiedlichen Positionen und Formen im Erdreich 20 angeordnet werden kann. Neben einer senkrechten und horizontalen Positionierung eines jeweils quaderförmig ausgebildeten Erdkollektors 10 ist auch ein ungefähr senkrechter Einbau eines ungefähr V-förmigen Erdkollektors 10 möglich. In dem dargestellten Ausführungsbeispiel sind die Vor- und Rücklaufrohre 26, 28 mit der Wärmepumpe 22 direkt verbunden. Es ist aber auch möglich, dass die Vor- und Rücklaufrohre 26, 28 mit einer Sammler-/Verteilereinheit (nicht dargestellt) zur Aufnahme des Wärmeträgermediums verbunden sind, wobei dann in diesem Fall die Sammler-/Verteilereinheit flüssigkeitsleitend mit der Wärmepumpe 22 verbunden ist.

Des Weiteren erkennt man, dass in dem dargestellten Ausführungsbeispiel die drei Erdkollektoren 10 in Serie geschaltet beziehungsweise angeordnet sind. Es ist aber auch möglich, mehrere Erdkollektoren 10 parallel zu schalten.

Figur 2 zeigt eine schematische Darstellung des Erdkollektors 10 gemäß einer ersten, ungefähr V-förmigen Einbauvariante. Man erkennt, dass das Rohr 18 im Bereich der Gitterelemente 12, 14, 16 überwiegend mäanderförmig verlegt und angeordnet ist. Die einzelnen durch die Gitterelemente 12, 14, 16 vorgegebenen Verlege- und Verlaufsebenen sind über das Rohr 18 miteinander verbunden. Das Rohr 18 ist zudem an einem Ende mit dem Vorlaufrohr 26 und mit dem anderen Ende mit dem Rücklaufrohr 28 verbunden, wobei in dem dargestellten Ausführungsbeispiel das Rohr 18 mit den Vor- und Rücklaufrohren 26, 28 einstückig ausgebildet ist. An dem Gitterelement 16 ist im Bereich des Rohrs 18 ein zweites Rohrsystem bestehend aus einem Rohr 36 sowie einem Zulauf 38 und einem Ablauf 40 des Rohrs 36 zur Übertragung von Wärme aus einem Sonnenkollektor angeordnet und befestigt. Die Befestigung des Rohrs 36 an dem Gitterelement 16 kann dabei wiederum mittels Klemmelementen oder Kabelbindern erfolgen. Das Rohr 36 ist ebenfalls flexibel ausgebildet und besteht aus verwitterungsbeständigem Kunststoff. Insbesondere kann das Rohr 36 aus Polyethylen oder Polybutylen bestehen. Des Weiteren erkennt man, dass das Rohr 36 ungefähr mäanderförmig verlegt und an dem Gitterelement 16 befestigt ist. Die gerade verlaufenden Abschnitte des Rohrs 36 sind dabei ungefähr senkrecht zu den entsprechenden Abschnitten des Rohrs 18 angeordnet. Als Wärmeträgermedium kann dabei Wasser oder eine Mischung aus Wasser und einem Frostschutzmittel in dem zweiten Rohrsystem 36, 38, 40 verwendet werden. Auch andere Wärmeleitenden Flüssigkeiten sind verwendbar. Das Wärmeträgermedium besteht üblicherweise aus einem Wasser-Glykol-Gemisch, wobei im ersten Rohrsystem 18, 26, 28 ein Frostschutz von bis zu -25°C erforderlich ist. Für das zweite Rohrsystem 36, 38, 40 ist ein Frostschutz bis ca. -15°C notwendig.

Außerhalb des Gebäudes 24 (vgl. Figur 1) kann das erste Rohrsystem 18, 26, 28 mit einer Sammler-/Verteilereinheit verbunden sein, das zweite Rohrsystem 36, 38, 40 mit einem solarthermischen Verteiler (nicht dargestellt), wobei letzterer die Schnittstelle zwischen dem zweiten Rohrsystem 36, 38, 40 und dem Sonnenkollektor darstellt.

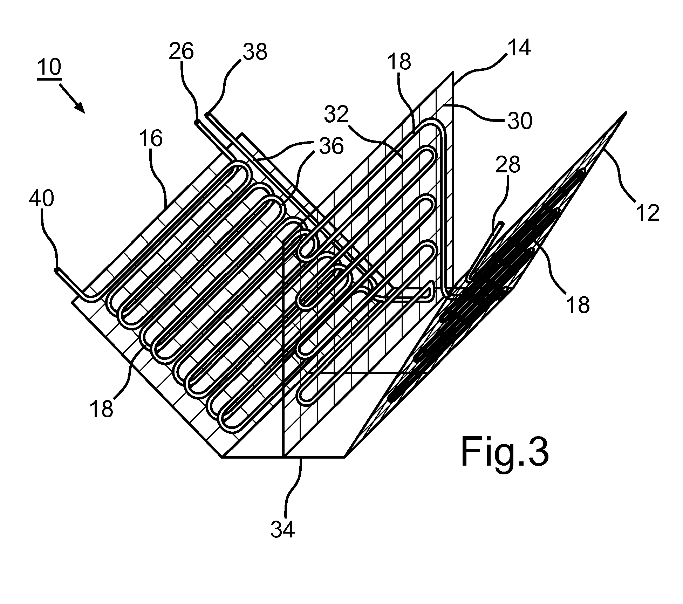

Figur 3 zeigt eine schematische Darstellung des Erdkollektors 10 gemäß einer zweiten, ungefähr V-förmigen Einbauvariante. Die Ausgestaltung dieses Ausführungsbeispiel entspricht im Wesentlichen der in der Figur 2 dargestellten Ausführungsform des Erdkollektors 10. Allerdings sind hier die gerade verlaufenden Abschnitte des Rohrs 36 ungefähr parallel zu den entsprechenden Abschnitten des Rohrs 18 angeordnet.

In dem dargestellten Ausführungsbeispielen gemäß den Figuren 2 und 3 sind lediglich in einem unteren Bereich des Erdkollektors 10 die Verbindungsstege 34 ausgebildet.

## Patentansprüche

1. Erdkollektor bestehend aus mindestens einem ein Wärmeträgermedium leitenden, flexiblen Rohr (18), wobei das Rohr (18) an einem Ende mit einem Vorlaufrohr (26) und mit dem anderen Ende mit einem Rücklaufrohr (28) verbunden ist,
**dadurch gekennzeichnet,**
**dass** der Erdkollektor (10) mindestens zwei parallel oder in vorbestimmten Winkeln zueinander angeordnete Gitterelemente (12, 14, 16) aufweist und die Gitterelemente (12, 14, 16) mittels Verbindungsstegen (34) miteinander verbunden und voneinander beabstandet sind, wobei das mindestens eine Rohr (18) an den jeweiligen einzelnen Gitterelementen (12, 14, 16) ungefähr mäander- oder schneckenförmig angeordnet und befestigt ist, derart, dass das Rohr (18) eine der Anzahl der Gitterelemente (12, 14, 16) entsprechende Anzahl an Verlaufsebenen ausbildet und durchläuft.

2. Erdkollektor nach Anspruch 1,
**dadurch gekennzeichnet,**
**dass** der Erdkollektor (10) mindestens drei parallel oder in vorbestimmten Winkeln zueinander angeordnete Gitterelemente (12, 14, 16) aufweist.

3. Erdkollektor nach Anspruch 1 oder 2,
**dadurch gekennzeichnet,**
**dass** das Rohr (18) und die Vor- und Rücklaufrohre (26, 28) einstückig ausgebildet sind.

4. Erdkollektor nach einem der vorhergehenden Ansprüche,
**dadurch gekennzeichnet,**
**dass** das Rohr (18) und/oder die Vor- und Rücklaufrohre (26, 28) aus verwitterungsbeständigem Kunststoff, insbesondere Polyethylen oder Polybutylen, bestehen.

5. Erdkollektor nach einem der vorhergehenden Ansprüche,
**dadurch gekennzeichnet,**
**dass** die Gitterelemente (12, 14, 16) Betonstahlmatten sind.

6. Erdkollektor nach einem der Ansprüche 1 bis 5,
**dadurch gekennzeichnet,**
**dass** die Gitterelemente (12, 14, 16) aus einem verwitterungsbeständigen Kunststoff bestehen.

7. Erdkollektor nach einem der vorhergehenden Ansprüche,
**dadurch gekennzeichnet,**
**dass** die Verbindungsstege (34) gleiche Längen aufweisen.

8. Erdkollektor nach einem der Ansprüche 1 bis 5,
**dadurch gekennzeichnet,**
**dass** die Verbindungsstege (34) an den jeweils gegenüberliegenden Enden des Erdkollektors (10) unterschiedliche Längen aufweisen.

9. Erdkollektor nach einem der vorhergehenden Ansprüche,
**dadurch gekennzeichnet,**
**dass** die Verbindungsstege (34) nur an einem tiefer in ein Erdreich (20) einzubringendes Ende des Erdkollektors (10) ausgebildet sind.

10. Erdkollektor nach einem der vorhergehenden Ansprüche,
**dadurch gekennzeichnet,**
**dass** an mindestens einem Gitterelement (12, 14, 16) im Bereich des Rohrs (18) ein zweites Rohrsystem (36, 38, 40) zur Übertragung von Wärme aus einem Sonnenkollektor angeordnet und befestigt ist.

11. Erdkollektor nach Anspruch 10,
**dadurch gekennzeichnet,**
**dass** das zweite Rohrsystem (36, 38, 40) ungefähr mäander- oder schneckenförmig angeordnet und befestigt ist.

12. Erdkollektor nach einem der vorhergehenden Ansprüche,
**dadurch gekennzeichnet,**
**dass** die Vor- und Rücklaufrohre (26, 28) mit einer Wärmepumpe (22) verbunden sind.

13. Erdkollektor nach einem der Ansprüche 1 bis 9,
**dadurch gekennzeichnet,**
**dass** die Vor- und Rücklaufrohre (26, 28) mit mindestens einer Sammler-/Verteilereinheit zur Aufnahme des Wärmeträgermediums verbunden sind und die Sammler-/Verteilereinheit flüssigkeitsleitend mit mindestens einer Wärmepumpe (22) verbunden ist.

14. Erdkollektor nach einem der vorhergehenden Ansprüche,
**dadurch gekennzeichnet,**
**dass** das Wärmeträgermedium aus Wasser oder einer Mischung aus Wasser und einem Frostschutzmittel besteht.

15. Erdkollektor nach einem der vorhergehenden Ansprüche,
**dadurch gekennzeichnet,**
**dass** das Rohr (18) mittels einer Vielzahl von Klemmelementen oder
Kabelbindern an den Gitterelementen (12, 14, 16) befestigt ist.

16. Erdkollektor nach Anspruch 15,
**dadurch gekennzeichnet,**
**dass** die Klemmelemente mit dem Gitterelement (12, 14, 16) einstückig ausgebildet sind.

17. Erdkollektor nach einem der vorhergehenden Ansprüche,
**dadurch gekennzeichnet,**
**dass** der Erdkollektor (10) als vorgefertigtes Bauelement ausgebildet ist.

18. Erdkollektor nach einem der vorhergehenden Ansprüche,
**dadurch gekennzeichnet,**
**dass** mehrere Erdkollektoren (10) in Serie oder parallel geschaltet beziehungsweise angeordnet sind.
